# EUROPEAN PATENT SPECIFICATION

(11) **EP 2 520 700 B1**
(45) Date of publication and mention of the grant of the patent: **08.07.2026**
(21) Application number: 12165877.7
(22) Date of filing: 27.04.2012
(51) Int. Cl.: D06F 37/22

(54) **Washing machine and control method thereof**
Waschmaschine und Steuerungsverfahren dafür
Machine à laver et son procédé de commande

(30) Priority: 04.05.2011 KR 20110042611
(43) Date of publication of application: 07.11.2012
(73) Proprietor: Samsung Electronics Co., Ltd., Suwon-si, Gyeonggi-do, 443-742 (KR)
(72) Inventor: Park, Jae Seuk, Gyeonggi-do (KR); Lee, Moo Hyung, Seoul (KR); Bae, Il Sung, Gyeonggi-do (KR); Kim, Sung Jong, Gyeonggi-do (KR)
(74) Representative: Grünecker Patent- und Rechtsanwälte PartG mbB

(56) References cited:
- EP-A2- 2 514 864
- US-A- 5 813 253
- US-A1- 2010 147 038

## Description

### BACKGROUND

### 1. Field

Embodiments of the present invention relate to a washing machine having balancers to compensate for unbalance.

### 2. Description of the Related Art

A washing machine includes a drum to accommodate laundry, such as clothes, and a motor to drive the drum, and conducts a series of operations, such as washing, rinsing and spin-drying cycles, using rotation of the drum.

When laundry is not uniformly distributed in the drum and is concentrated at a specific region during rotation of the drum, the drum is eccentrically rotated and thus generates vibration and noise, and if such vibration and noise is severe, components, such as the drum and the motor, may be damaged.

A washing machine is provided with balancers which compensate for unbalanced load generated within the drum to stabilize rotation of the drum.

US 5,813,253 A discloses a washing machine with a drum and closed circular tubular paths which contain balancing bodies which are mounted on the drum. The balancing bodies can move freely along the paths.

US 2010/147038 A1 discloses a laundry treatment device with a container which is suspended on two springs and supported on spring piston dampers. A drum is rotatable mounted in the corresponding container. Moreover, there is a detecting unit for detecting one of the position in the arrangement of the container in the housing.

EP 2 514 864 A2 published after the priority of the present application discloses a laundry machine and a method for controlling same. There are two or more balancing units, which are independently movable. In particular, eccentricity is detected and based on the corresponding measurement of this eccentricity, the balancing units are moved. Furthermore, the balancing units are controlled in view of a phase difference and also in view of a distance between the balancing units. The corresponding phase sensor is arranged outside of a corresponding housing along which the balancing units are moved. A distance sensing device is provided on each balancing unit and this generates a signal when the balancing units are connected.

### SUMMARY

It is an object of the present invention to provide a washing machine which improves performance of balancers, and a control method thereof.

Additional aspects will be set forth in part in the description which follows and, in part, will be obvious from the description, or may be learned by practice of the invention.

The object is solved by a washing machine with the features of claim 1 or a control method with the features of claim 9. Moreover, a corresponding balancer is disclosed by claim 17.

The drum includes a first position identification unit mounted on the external surface of the drum and sensed by the position sensors, and each of the balancing modules includes a mass body, a power supply unit to supply power, a communication unit to receive the moving signal from the controller, a drive unit to generate drive force to move the balancing module within the balancing housing according to the moving signal, and a second position identification unit sensed by the position sensors to sense the position of each of the balancing modules. Each of the position sensors may include one of a Hall sensor, an infrared sensor and an optical fiber sensor.

Each of the position identification units may include one of a magnetic body, a light emitting unit and a reflective plate.

The position sensors may include a first position sensor to sense the first position identification unit and to generate a reference signal to detect a position of the unbalance and to detect positions of the balancing modules, and second position sensors, each of which senses the second position identification unit.

The controller may detect the intensity of the unbalance through signals sensed by the vibration sensors, and detect the relative position of the unbalance with respect to the position of the first position identification unit through phase differences between the reference signal of the first position sensor and the signals sensed by the vibration sensors.

The controller may detect the relative positions of the balancing modules with respect to the position of the first position identification unit through phase differences between the reference signal of the first position sensor and signals sensed by the second position sensors, determine positions of the balancing modules to compensate for the unbalance, and move the balancing modules to the determined positions.

The vibration sensors may be mounted at front and rear ends of the external surface of the tub.

The drum may include a cylindrical member and front and rear plates respectively disposed at the front and rear portions of the cylindrical member, the balancing housings may include a first balancer housing and a second balancer housing overlapping each other in the direction of a rotary axis of the drum, and the first balancer housing and the second balancer housing may be respectively mounted on the front plate and the rear plate.

The balancing modules may have a rod shape extending in the circumferential direction of the disc-shaped channel.

The washing machine may further include vibration sensors mounted on the tub, a first position identification unit mounted on the drum, second position identification units mounted on the balancing modules, a first position sensor to sense the first position identification unit and to generate a reference signal to detect the position of the unbalance and to detect the positions of the balancing modules, and second position sensors to sense the second position identification units.

The detection of the unbalance applied to the drum may include detecting the relative position of the unbalance with respect to the first position identification unit through phase differences between the reference signal of the first position sensor and signals sensed by the vibration sensors.

The detection of the positions of the balancing modules within the balancer housings may include detecting the relative positions of the balancing modules with respect to the first position identification unit through phase differences between the reference signal of the first position sensor and signals sensed by the second position sensors.

The determination of the positions of the balancing modules to compensate for the unbalance applied to the drum may include determining positions of the balancing modules to apply force corresponding to the intensity of the unbalance in the opposite direction to the direction of the unbalance.

The control of the balancing modules to move to the determined positions may include controlling the balancing modules to move to the determined positions by generating signals to move the balancing modules to the determined positions and transmitting the signals to the balancing modules.

The control method may further include re-detecting the vibration value of the tub and comparing the vibration value with the reference value, after the control of the balancing modules to move to the determined positions.

The control method may further include, when the detected vibration value of the tub is not more than the predetermined reference value, increasing the RPM of the drum, judging whether or not the RPM of the drum reaches a second RPM, detecting the vibration value of the tub, upon judging that the RPM of the drum has not reached the second RPM, detecting the position of the unbalance applied to the drum and the positions of the balancing modules within the balancer housings, when the detected vibration value of the tub is more than the predetermined reference value, determining the positions of the balancing modules to compensate for the unbalance applied to the drum, controlling the balancing modules to move to the determined positions, and re-detecting the vibration value of the tub and comparing the vibration value with the reference value, when the balancing modules move to the determined positions.

The control method may further include, upon judging that the RPM of the drum has reached the second RPM, judging whether or not a spin-drying cycle time which is input in advance has passed, detecting the vibration value of the tub, upon judging that the spin-drying cycle time has not passed, detecting the position of the unbalance applied to the drum and the positions of the balancing modules within the balancer housings, when the detected vibration value of the tub is more than the predetermined reference value, determining the positions of the balancing modules to compensate for the unbalance applied to the drum, controlling the balancing modules to move to the determined positions, and re-detecting the vibration value of the tub and comparing the vibration value with the reference value, when the balancing modules move to the determined positions.

The control method may further include judging whether or not the spin-drying cycle time has passed, when the detected vibration value of the tub is not more than the predetermined reference value.

### BRIEF DESCRIPTION OF THE DRAWINGS

These and/or other aspects of the invention will become apparent and more readily appreciated from the following description of the embodiments, taken in conjunction with the accompanying drawings of which:
FIG. 1 is a longitudinal-sectional view illustrating the configuration of a washing machine in accordance with one embodiment of the present invention;
FIG. 2 is a plan view illustrating the configuration of a balancer of the washing machine in accordance with the embodiment of the present invention;
FIG. 3 is a cross-sectional view taken along the line I-I of FIG. 2;
FIG. 4 is a perspective view illustrating the configuration of a balancing module of the washing machine in accordance with the embodiment of the present invention;
FIG. 5 is a block diagram illustrating control of balancing modules of the washing machine in accordance with the embodiment of the present invention;
FIG. 6 is a graph representing signal waveforms of Hall sensors of the washing machine in accordance with the embodiment of the present invention;
FIG. 7 is a graph representing signal waveforms of the Hall sensor and a vibration sensor of the washing machine in accordance with the embodiment of the present invention;
FIG. 8 is a graph representing RPM of a motor according to time during a spin-drying cycle of the washing machine in accordance with the embodiment of the present invention; and
FIGS. 9A to 9C are flowcharts illustrating a control method of the balancing modules of the washing machine in accordance with the embodiment of the present invention.

### DETAILED DESCRIPTION

Reference will now be made in detail to the embodiments of the present invention, examples of which are illustrated in the accompanying drawings, wherein like reference numerals refer to like elements throughout. In the drawings, the same or similar elements are denoted by the same reference numerals even though they are depicted in different drawings.

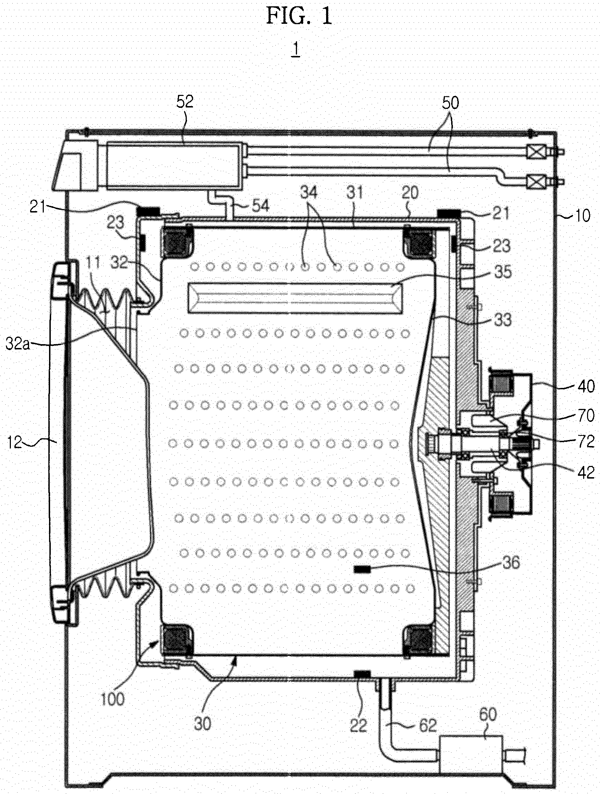

FIG. 1 is a longitudinal-sectional view illustrating the configuration of a washing machine in accordance with one embodiment.

As shown in FIG. 1, a washing machine 1 includes a cabinet 10 forming the external appearance of the washing machine 1, a tub 20 disposed within the cabinet 10, a drum 30 rotatably disposed within the tub 20, and a motor 40 to drive the drum 30.

An inlet 11 through which laundry is put into the drum 20 is formed on the front surface of the cabinet 10. The inlet 11 is opened and closed by a door 12 installed on the front surface of the cabinet 10.

Water supply pipes 50 to supply wash water to the tub 20 are installed above the tub 20. One end of each of the water supply pipes 50 is connected to an external water supply source (not shown), and the other end of each of the water supply pipes 50 is connected to a detergent supply device 52.

The detergent supply device 52 is connected to the tub 20 through a connection pipe 54. Water supplied through the water supply pipe 50 is supplied to the detergent supply device 52 and is mixed with detergents in the detergent supply device 52, and the water mixed with the detergents is supplied to the inside of the tub 20.

A drain pump 60 and a drain pipe 62 to discharge water in the tub 20 to the outside of the cabinet 10 are installed under the tub 20.

Vibration sensors 21 are mounted on the external surface of the tub 20. The vibration sensors 20 are mounted at both ends of the tub 20 in the forward and backward directions and detect distribution of unbalance applied to the tub 20 in the forward and backward directions.

The drum 30 includes a cylindrical member 31, a front plate 32 disposed at the front portion of the cylindrical member 31, and a rear plate 33 disposed at the rear portion of the cylindrical member 31. An opening 32a through which laundry is put into and taken out of the drum 30 is formed through the front plate 32, and a drive shaft 42 to transmit power of the motor 40 is connected to the rear plate 33.

A plurality of through holes 34 to circulate wash water is provided on the circumference of the drum 30, and a plurality of lifters 35 to tumble laundry when the drum 30 is rotated is installed on the inner circumferential surface of the drum 30.

The drive shaft 42 is disposed between the drum 30 and the motor 40. One end of the drive shaft 42 is connected to the rear plate 33 of the drum 30, and the other end of the drive shaft 42 extends to the outside of the rear wall of the tub 20. When the motor 40 drives the drive shaft 42, the drum 30 connected to the drive shaft 42 is rotated about the drive shaft 42.

A first position identification unit 36 is mounted at a random position of the external surface of the drum 30. Here, the first position identification unit 36 may be a magnetic body including a permanent magnet, a light emitting unit to emit light, or a reflective plate to reflect irradiated light. In order to sense the first position identification unit 36 mounted on the external surface of the drum 30, a first position sensor 22 may be mounted on the inner surface of the tub 20. The first position sensor 22 senses the first position identification unit 36 mounted on the external surface of the drum 30 during rotation of the drum 30, generates a sensing signal, and then transmits the sensing signal to a controller 80. Here, the first position sensor 22 may be a Hall sensor, an infrared sensor, or an optical fiber sensor. If the first position sensor 22 is a Hall sensor, the first position identification unit 36 may be a magnetic body, if the first position sensor 22 is an infrared sensor, the first position identification unit 36 may be a light emitting unit, and if the first position sensor 22 is an optical fiber sensor, the first position identification unit 36 may be a reflective plate. The Hall sensor may sense magnetic force of the magnetic body to generate a sensing signal, the infrared sensor may receive light irradiated from the light emitting unit to generate a sensing signal, and the optical fiber sensor may receive light reflected by the reflective plate to generate a sensing signal.

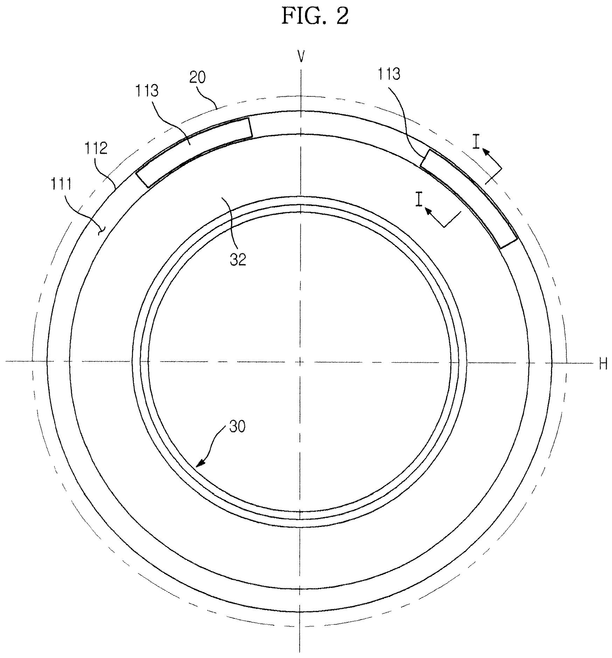

Further, second position sensors 23 are mounted at random positions of the inner surface of the tub 20 opposite to disc-shaped balancers 100 mounted on the front and rear surfaces of the drum 30. The second position sensor 23 senses a second position identification unit 125 mounted on a balancing module 113 (with reference to FIG. 2), generates a sensing signal, and then transmits the signal to the controller 80. Here, the configurations of the second position identification units 125 and the second position sensors 23 are the same as those of the above-described first position identification unit 36 and the first position sensor 22, and a detailed description thereof will thus be omitted.

The controller 80 may detect the positions of the balancing modules 113 through the sensing signal of the first position sensor 22 and the sensing signals of the second position sensors 23. This will be described in more detail later.

A bearing housing 70 to rotatably support the drive shaft 42 is installed on the rear wall of the tub 20. The bearing housing 70 may be formed of an aluminum alloy, and be inserted into the rear wall of the tub 20 when the tub 20 is produced through injection molding. Bearings 72 to facilitate rotation of the drive shaft 42 are installed between the bearing housing 70 and the drive shaft 42.

During a washing cycle, the motor 40 rotates the drum 30 at a low velocity in a regular direction and in the reverse direction, and thereby tumbling of the laundry within the drum 30 is repeated, thus removing contaminants from the laundry.

During a spin-drying cycle, when the motor 40 rotates the drum at a high velocity in one direction, water is separated from the laundry by centrifugal force applied to the laundry.

When the laundry is not uniformly distributed within the drum 30 and is concentrated at a specific region during rotation of the drum 30 in the spin-drying process, rotation of the drum 30 becomes unstable and thus causes vibration and noise.

Therefore, the washing machine 1 is provided with the balancers 100 to stabilize rotation of the drum 30. FIG. 1 illustrates the washing machine 1 to which the balancers 100 of FIG. 2 are applied.

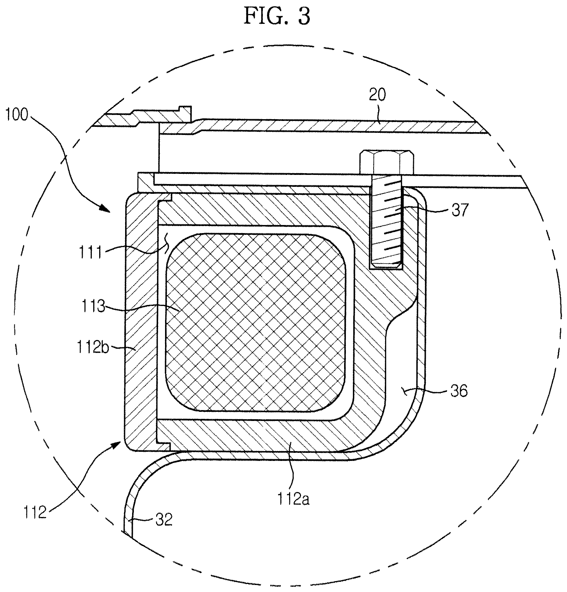

FIG. 2 is a plan view illustrating the configuration of the balancer of the washing machine in accordance with the embodiment of the present invention, and FIG. 3 is a cross-sectional view taken along the line I-I of FIG. 2.

As shown in FIGS. 2 and 3, the balancer 100 includes a balancer housing 112 and balancing modules 113.

The balancer housing 112 is provided with a disc-shaped channel 111, and the balancing modules 113 are movably disposed in the channel 111. The balancing modules 113 may move within the channel 111 so as to compensate for unbalanced load present in the drum 30 during rotation of the drum 30.

The balancer 100 may be mounted on the front plate 32 of the drum 30. A disc-shaped recess 36 having an opened front surface is formed on the front plate 32 of the drum 30, and the balancer housing 112 is accommodated in the recess 36. The balancer housing 112 may be connected to the drum 30 through fastening members 37 so as to be firmly fixed to the drum 30. Further, the balancer 100 may be mounted on the rear plate 33 of the drum 30 in the same manner.

The balancer housing 112 includes a disc-shaped housing body 112a having an opening formed on one side surface, and a cover 112b to cover the opening. The inner surface of the housing body 112a and the inner surface of the cover 112b define the disc-shaped channel 111.

The channel 111 may have a rectangular cross-section and the balancing modules 113 may have a rectangular cross-section, as shown in FIG. 3. The balancing modules 113 may be provided to have a square pillar shape extending in the circumferential direction of the channel 111. However, the balancing modules 113 are not limited to the square pillar shape, and may have a cylinder shape or a polygonal prism shape. Further, the cross-sectional shape of the balancing modules 113 may be changed in the circumferential direction of the channel 111.

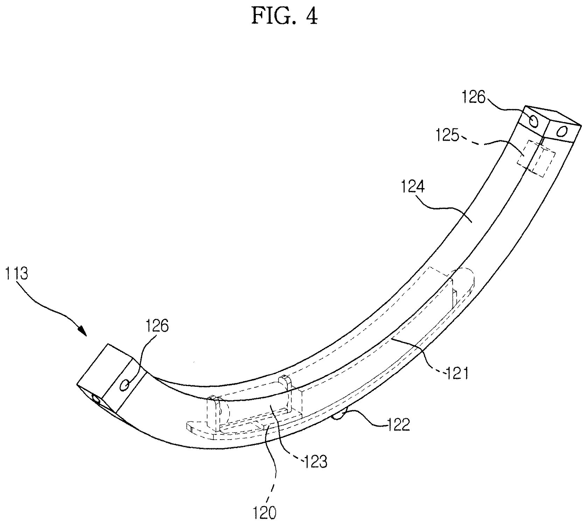

FIG. 4 is a perspective view illustrating the configuration of the balancing module 113 of the washing machine 1 in accordance with the embodiment of the present invention.

The balancing module 113 includes a communication unit 120 to receive a moving signal from the controller 80, a drive unit 121 to provide drive force to move the balancing module 113 within the channel 111 of the balancing housing 112 according to the moving signal received from the controller 80, a wheel 122 rotated by the drive force from the drive unit 121, a power supply unit 123 to supply power to the balancing module 113, a mass body 124, the second position identification unit 125 allowing the second position sensor 23 to sense the position of the balancing module 113, and balls 126 to reduce frictional force generated when the balancing module 113 moves along the channel 111.

The communication unit 120 is a wireless communication module to conduct communication with the controller 80, and may employ an RF communication method including ZigBee. The controller 80 moves the balancing modules 113 to compensate for unbalance generated due to rotation of the drum 30 when laundry is not uniformly distributed within the drum 30 but is concentrated at a specific region. The controller 80 determines a position to which the balancing module 113 is to move and transmits a corresponding signal to the balancing module 113, and the communication unit 120 of the balancing module 113 receives the signal.

The drive unit 121 generates drive force to move the balancing module 113 to the position to compensate for the unbalance according to the moving signal received from the controller 80, and drives the wheel 122 using the generated drive force, thereby moving the balancing module 113 to the target position. The drive unit 121 may include a motor to generate drive force, and a gear box having a specific reduction ratio to adjust drive force of the motor.

The wheel 122 is driven by drive force of the drive unit 121, and moves the balancing module 113 to the target position in the channel 112 of the balancer housing 112. Although FIG. 4 illustrates one wheel, one or more wheels may be used.

The power supply unit 123 supplies power to the balancing module 113. The power supply unit 123 supplies power required for generation of drive force to move the balancing module 113 and communication of the communication unit 120. The power supply unit 123 may be a rechargeable battery.

The mass body 124 may be formed of steel, but is not limited thereto.

The second position identification unit 125 may be a magnetic body including a permanent magnet, a light emitting unit to emit light, or a reflective plate to reflect irradiated light, and may be mounted at a random position within the balancing module 113.

The balls 126 may be respectively installed on sloping surfaces of the balancing module 113 to reduce friction force generated due to friction of the balancing module 113 with the inner wall of the channel 111 when the balancing module 113 moves along the channel 111. The balls 126 are rotated when the balls 126 rub against the inner wall of the channel 111, thereby reducing friction force.

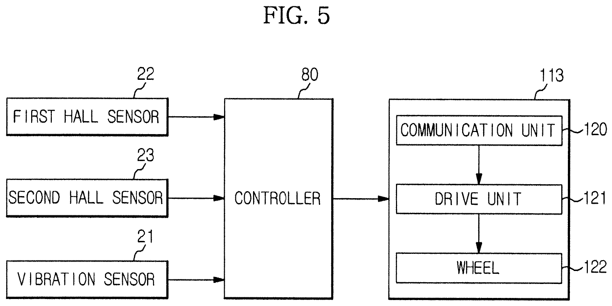

FIG. 5 is a block diagram illustrating control of the balancing modules 113 of the washing machine 1 in accordance with the embodiment of the present invention. Hereinafter, a control process of the balancing modules 113 on the assumption that the position sensors and the position identification units are Hall sensors and magnetic bodies will be described.

As shown in FIG. 5, the washing machine 1 includes the vibration sensors 21, the first Hall sensor 22, the second Hall sensors 23, the controller 80 and the balancing modules 113.

The vibration sensors 21 serve to sense the intensity and direction of unbalance applied to the drum 30 during rotation of the drum 30, and may be mounted at both ends in the forward and backward directions of the tub 20 on the external surface of the tub 20 to detect distribution of unbalance applied to the tub 20 in the forward and backward directions of the tub 20.

The first Hall sensor 22 may be installed around the first magnetic body 36 to sense the first magnetic body 36 mounted on the external surface of the drum 30. Preferably, the first Hall sensor 22 is installed on the inner wall of the tub 20 at a position opposite to the first magnetic body 36. The second Hall sensors 23 may be installed around the balancer housings 112 respectively installed on the front plate 32 and the rear plate 33 of the drum 30 to sense the second magnetic bodies 125 of the balancing modules 113, and is preferably installed on the inner wall of the tub 20 at positions opposite to the balancer housings 112.

The controller 80 detects positions of the balancing modules 113 in the housings 112 from a result of sensing by the first Hall sensor 22 and the second Hall sensors 23.

When the magnetic body passes by the Hall sensor, the Hall sensor senses magnetic force of the magnetic body and generates a signal of a pulse waveform. The first Hall sensor 22 senses the first magnetic body 36 mounted on the external surface of the drum 30 and thus generates one pulse per rotation. Since the second Hall sensor 23 senses the second magnetic body 125 mounted on the balancing module 113, the second Hall sensor 23 generates two pulses per rotation if two balancing modules 113 are disposed in one balancer 100, and generates one pulse per rotation if one balancing module 113 is disposed in one balancer 100.

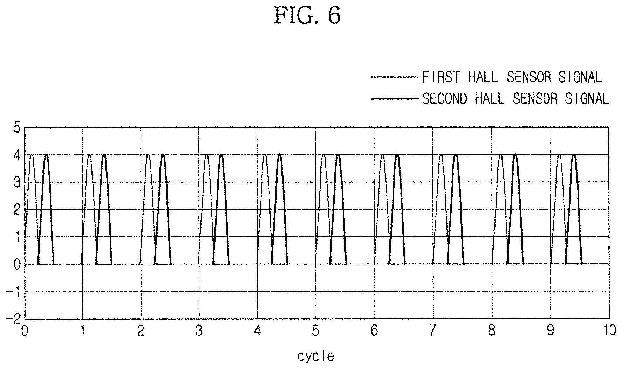

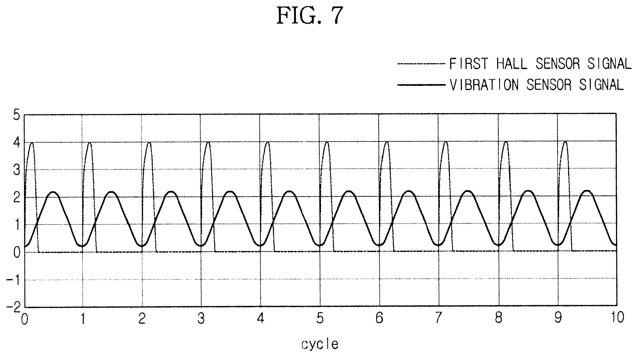

FIG. 6 is a graph representing signal waveforms of the Hall sensors of the washing machine 1 in accordance with the embodiment of the present invention, and FIG. 7 is a graph representing signal waveforms of the Hall sensor and the vibration sensor 21 of the washing machine 1 in accordance with the embodiment of the present invention.

The controller 80 detects the position of the balancing module 113 through a phase difference between signal waveforms generated by the first Hall sensor 22 and the second Hall sensor 23. That is, the controller 80 detects the relative position of the balancing module 113 with respect to the position of the first magnetic body 36 mounted on the external surface of the drum 30 as a reference position.

When the balancing module 113 is located at the same position as the first magnetic body 36 in the circumferential direction, the first Hall sensor 22 and the second Hall sensor 23 generate signals at the same point of time and thus the two signals coincide with each other without a phase difference. As the positions of the balancing module 113 and the first magnetic body 36 are changed, a phase difference between the two signals occurs. Through such a phase difference, the relative position of the balancing module 113 with respect to the first magnetic body 36 may be detected.

If two balancing modules 113 are disposed in one balancer 100, the second magnetic bodies 125 mounted on the respective balancing modules 113 may be varied or the numbers of the second magnetic bodies 125 mounted on the balancing modules 113 may be varied to identify the respective balancing modules 113.

The controller 80 may detect the intensity and position of unbalance applied to the drum 30 as results of sensing by the first Hall sensor 22 and the vibration sensors 21.

If unbalance is applied to the drum 30, a signal measured by the vibration sensor 21 generally has a sinusoidal waveform having periodicity (the graph represented by the solid line in FIG. 7). The controller 80 detects the intensity of unbalance applied to the drum 30 through the intensity of such a signal.

In the same manner as detection of the position of the balancing module 130, a position to which balance is applied is detected through a phase difference between the signal waveform generated by the first Hall sensor 22 and the signal waveform generated by the vibration sensors 21. That is, the relative position of unbalance with respect to the position of the first magnetic body 36 mounted on the external surface of the drum 30 as a reference position is detected.

If unbalanced load generating unbalance is present at the same position as the first magnetic body 36 in the circumferential direction, the first Hall sensor 22 and the vibration sensors 21 generate signals at the same point of time and thus there is no phase difference between the two signals. As the positions of the unbalanced load and the first magnetic body 36 are changed, a phase difference between the two signals occurs. Through such a phase difference, the relative position of the unbalanced load with respect to the first magnetic body 36 may be detected, and thus the direction of unbalance generated due to the unbalanced load may be detected.

As described above, the controller 80 detects the intensity and position of the unbalance and the positions of the balancing modules 113 based on results of sensing by the vibration sensors 21, the first Hall sensor 22 and the second Hall sensors 23, and determines the positions of the balancing modules 113 to effectively compensate for the unbalance therethrough. If two balancing modules 113 are used, the positions of the two balancing modules 113 where the unbalance is compensated for by applying the sum of centrifugal forces by the two balancing modules 113 in the opposite direction of centrifugal force by eccentric laundry are determined. That is, in this case, the two balancing modules 113 are located to be symmetrical with respect to an axis to which the unbalance is applied, and an angle formed by the two balancing modules 13 from the axis is determined by the intensity of the unbalance.

When the position of the balancing module 113 to compensate for the unbalance is determined, the controller 80 generates a control signal to move the balancing module 113 to the corresponding position and transmits the control signal to the balancing module 113, and the communication unit 120 of the balancing module 113 receives the control signal.

The drive unit 121 of the balancing module 113 transmits drive force to move the balancing module 113 to the position to compensate for the unbalance to the wheel 122 according to the control signal received by the communication unit 120, and the wheel 122 moves the balancing module 113 using the received drive force.

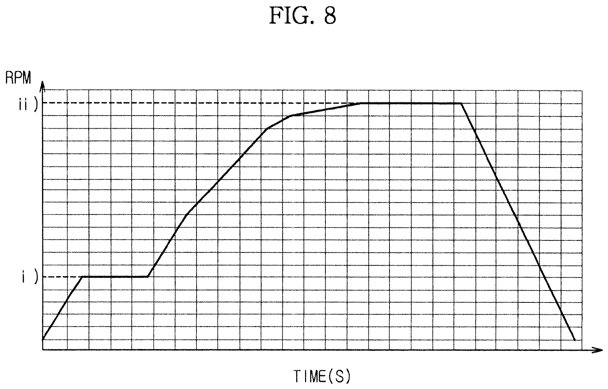

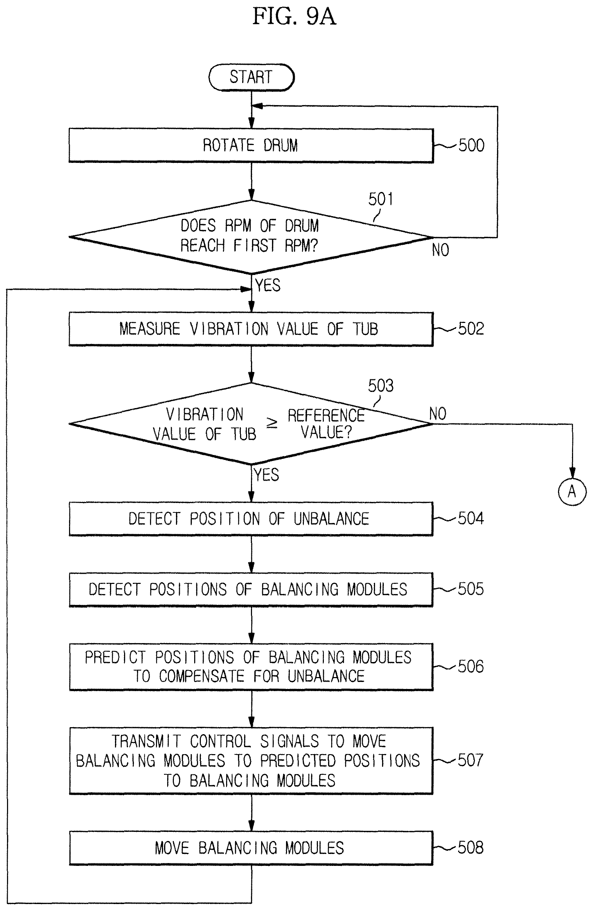

FIG. 8 is a graph representing RPM of the motor according to time during the spin-drying cycle of the washing machine in accordance with the embodiment of the present invention, and FIGS. 9A to 9C are flowcharts illustrating a control method of the balancing modules 113 of the washing machine 1 in accordance with one embodiment of the present invention.

With reference to FIG. 9A, the controller 80 rotates the drum 30 to conduct spin-drying of laundry (Operation 500). When the drum 30 is rotated to conduct spin-drying of the laundry, free movement of the laundry is restricted by centrifugal force.

The controller 80 detects the RPM of the drum 30, and judges whether or not the RPM of the drum 30 reaches a first RPM (Operation 501). Upon judging that the RPM of the drum 30 has not reached the first RPM, the controller 80 rotates the drum 30 at a higher velocity until the RPM of the drum 30 has reached the first RPM.

A liquid balancer or a ball balancer installed on the conventional washing machine exhibits a balancing function to compensate for unbalance after a designated RPM (for example, after 300-400 RPM), but does not exhibit balancing effects at a specific RPM (for example, 100-350 RPM) or rather increases the unbalance. Therefore, in the present invention, in order to reduce unbalance at an operation section of the above-described specific RPM, whether or not the drum reaches the operation section of the corresponding RPM is judged, and then a balancing process to compensate for the unbalance is conducted when the drum has reached the operation section of the corresponding RPM. Therefore, the first RPM may be set to a value within a range of 100-350 RPM more than a RPM (for example, 100 RPM) at which laundry is fixed in the drum by centrifugal force during spin-drying of the laundry and be preferably set to 250 RPM (with reference to i of FIG. 8), without being limited thereto.

The controller 80 detects a vibration value of the tub 20 when the RPM of the drum 30 has reached the first RPM (Operation 502). The controller 80 detects a degree of vibration of the tub 20 by receiving a result of sensing by the vibration sensors 21 mounted on the tub 20 during rotation of the drum 30.

The controller 80 compares the detected vibration value with a reference value (Operation 503). As a result of the comparison, upon judging that the vibration value of the tub 20 is equal to or greater than the reference value, the controller 80 judges that unbalance is applied to the drum 30 and conducts balancing to compensate for the unbalance.

The controller 80 detects an intensity and position of the unbalance applied to the drum 30 by receiving a result of sensing by the first Hall sensor 22 and the vibration sensors 21 during rotation of the drum 30 (Operation 504). The controller 80 detects the intensity of the unbalance through sizes of signals sensed by the vibration sensor 21, and detects the relative position of the unbalance with respect to the position of the first magnetic body 36 mounted on the external surface of the drum 30 through phase differences between a signal sensed by the first Hall sensor 22 sensing the first magnetic body 36 mounted on the surface of the drum 30 and signals sensed by the vibration sensors 21 sensing vibration of the tub 20.

Further, the controller 80 detects the positions of the balancing modules 113 by receiving results of sensing by the first Hall sensor 22 and the second Hall sensors 23 during rotation of the drum 30 (Operation 505). The controller 80 detects the relative positions of the balancing modules 113 with respect to the position of the first magnetic body 36 mounted on the external surface of the drum 30 through phase differences between a signal sensed by the first Hall sensor 22 sensing the first magnetic body 36 mounted on the surface of the drum 30 and signals sensed by the second Hall sensors 23 mounted on the balancing modules 113.

The controller 80 predicts the positions of the balancing modules 113 to compensate for the unbalance applied to the drum 30 based on results of detection of the intensity and position of the unbalance and the positions of the balancing modules 113 (Operation 506). If one balancer 100 includes two balancing modules 113, the controller 80 determines the positions of the balancing modules 113 to compensate for the unbalance by applying the sum of centrifugal forces by the two balancing modules 113 in the opposite direction of centrifugal force by the laundry.

The controller 80 generates control signals to move the balancing modules 113 to the predicted positions, and transmits the control signals to the balancing modules 113 (Operation 507). When the communication unit 120 of the balancing module 113 receives the control signal from the controller 80, the drive unit 121 generates drive force to move the balancing module 113 according to the control signal and then drives the wheel 122, thereby moving the balancing module 113 to the position to compensate for the unbalance (Operation 508). When the balancing module 113 moves to the position to compensate for the unbalance, rotation of the wheel 122 is stopped through cogging torque of the drive unit motor, thereby stopping movement of the balancing module 113. Here, the wheel 122 may be formed a material providing high frictional force, such as rubber.

The controller 80 re-detects the vibration value of the tub 20 and compares the vibration value of the tub 20 with the reference value, when the balancing modules 113 move to the positions to compensate for the unbalance, thereby judging whether or not the unbalance is compensated for.

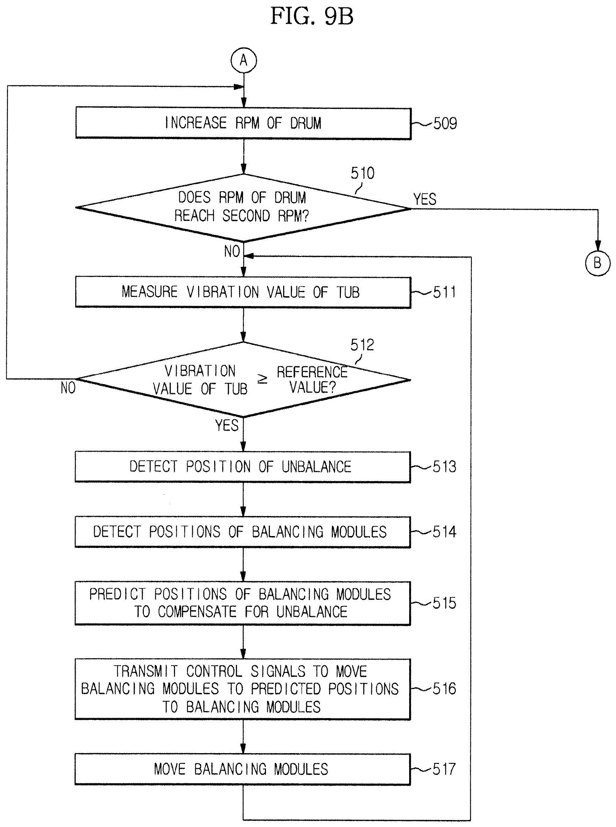

With reference to FIG. 9B, the controller 80 increases the RPM of the drum 30 by increasing the rotating velocity of the drum 30 upon judging that the vibration value of the tub 20 is smaller than the reference value (Operation 509).

The controller 80 detects the RPM of the drum 30 and judges whether or not the RPM of the drum 30 reaches a second RPM (Operation 510). Here, the second RPM may be set to the maximum RPM of the drum 30 to conduct the spin-drying cycle (with reference to ii of FIG. 8) or be variously set according to a spin-drying mode, and then be input to the washing machine 1 in advance.

Upon judging that the RPM of the drum 30 has not reached the second RPM, the controller 80 detects the vibration value of the tub 20 (Operation 511). The controller 80 detect a degree of vibration of the tub 20 by receiving a result of sensing by the vibration sensors 21 mounted on the tub 20 during rotation of the drum 30. In comparison with the initial stage of the spin-drying cycle, the amount of water contained in the laundry is gradually decreased as the spin-drying cycle progresses. Therefore, the controller 80 continuously detects the degree of vibration of the tub 20 until the RPM of the drum 30 has been increased and then reached the second RPM after the first balancing process shown in FIG. 9A has been completed, thereby coping with change of the intensity of the unbalance.

The controller 80 compares the detected vibration value with the reference value (Operation 512). As a result of the comparison, the controller 80 judges that unbalance is applied to the drum 30 and conducts second balancing to compensate for the unbalance upon judging that the vibration value of the tub 20 is equal to or greater than the reference value, and increases the RPM of the drum 30 by increasing the rotating velocity of the drum 30 upon judging that the vibration value of the tub 20 is smaller than the reference value (Operation 509).

Thereafter, Operations 513 to 517 are equal to Operations 504 to 508 of FIG. 9A, and a detailed description thereof will thus be omitted.

When the RPM of the drum 30 has reached the second RPM, the controller 80 continuously conducts the spin-drying cycle until a spin-drying cycle time which is input in advance has passed, and monitors in real time whether or not unbalance is applied to the drum 30 until the spin-drying cycle has been completed, thereby continuously conducting the balancing process.

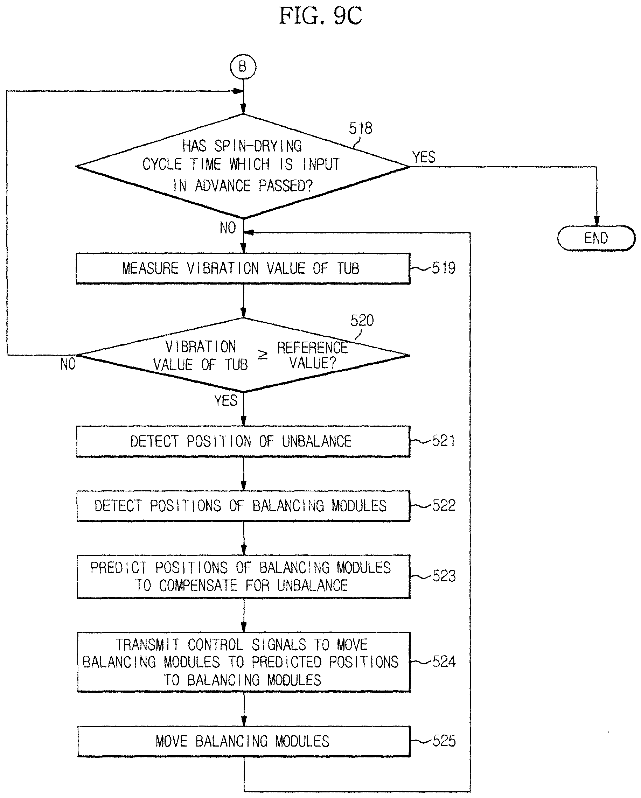

With reference to FIG. 9C, the controller 80 judges whether or not the spin-drying cycle time which is input in advance has passed (Operation 518). The controller 80 detects the vibration value of the tub 20, upon judging that the spin-drying cycle time has not passed (Operation 519). The controller 80 detects a degree of vibration of the tub 20 by receiving results of sensing by the vibration sensors 21 mounted on the tub 20 during rotation of the drum 30.

The controller 80 compares the detected vibration value with the reference value (Operation 520). As a result of comparison, the controller 80 judges that unbalance is applied to the drum 30 and conducts third balancing to compensate for the unbalance upon judging that the vibration value of the tub 20 is equal to or greater than the reference value, and judges whether or not the spin-drying cycle time has passed, if the vibration value of the tub 20 detected after conduction of the third balancing is smaller than the reference value.

Thereafter, Operations 521 to 525 are equal to Operations 504 to 508 of FIG. 9A, and a detailed description thereof will thus be omitted.

As described above, the washing machine in accordance with the embodiment may continuously conduct the balancing process by monitoring in real time whether or not unbalance is applied to the drum 30 from when the spin-drying cycle is started until the spin-drying cycle has been completed.

As is apparent from the above description, a washing machine in accordance with one embodiment controls unbalance applied to a drum during a spin-drying cycle in a short period of time.

Further, the washing machine reduces vibration due to unbalance during the spin-drying cycle, thereby being designed to have a greater capacity.

Moreover, the washing machine removes or minimizes a vibration suppression unit, such as a damper, thereby reducing production costs.

Although a few embodiments have been shown and described, it would be appreciated by those skilled in the art that changes may be made in these embodiments without departing from the principles of the invention, the scope of which is defined in the claims and their equivalents.

## Claims

1. A washing machine (1) comprising:
a drum (30) accommodating laundry and rotated by rotary force transmitted from a drive source (40, 42), and
balancer housings (112) mounted on the drum (30), each of the balancer housings including a disc-shaped channel (111) formed therein;
balancing modules (113) movably disposed in the channels (111) of the balancer housings (112);
vibration sensors (21) to sense unbalance applied to the drum (30) during rotation of the drum;
a first position identification unit (36) mounted on the external surface of the drum (30);
a second position identification unit (125) mounted at a random position within the balancing module (113),
position sensors (22, 23) to sense the positions of the balancing modules (113), including a first position sensor (22) adapted to sense the first position identification unit (36) and second position sensors (23) adapted to sense the second position identification unit (125),
wherein the first position sensor (22) is adapted to generate a reference signal to detect a position of the unbalance and to detect positions of the balancing modules (113);
and
a controller (80) adapted to:
- detect the intensity of the unbalance through signals sensed by the vibration sensors (21),
- detect the relative position of the unbalance with respect to the position of the first position identification unit (36) through phase differences between the reference signal of the first position sensor (22) and the signals sensed by the vibration sensors (21),
- calculate moving positions of the balancing modules (113) to compensate for the unbalance based on the detected positions,
- transmit moving signals to move the balancing module (113) to the calculated moving positions, and
- control movement of the balancing modules (113) based on the position of the unbalance sensed by the vibration sensors (21) and the positions of the balancing modules (113) sensed by the position sensors (22, 23).

2. The washing machine according to claim 1, wherein:
each of the balancing modules (113) includes:
a mass body (124);
a power supply unit (123);
a communication unit (120) to receive the moving signal from the controller (80);
a drive unit (121) to generate drive force to move the balancing module (113) within the balancing housing (112) according to the moving signal.

3. The washing machine according to claim 1, wherein each of the position sensors (22, 23) includes one of a Hall sensor, an infrared sensor and an optical fiber sensor.

4. The washing machine according to claim 2, wherein each of the position identification units (36, 125) includes one of a magnetic body, a light emitting unit and a reflective plate.

5. The washing machine according to one of the previous claims, wherein the controller (80) is adapted
to detect the relative positions of the balancing modules (113) with respect to the position of the first position identification unit (36) through phase differences between the reference signal of the first position sensor (22) and signals sensed by the second position sensors (23),
to determine positions of the balancing modules (113) to compensate for the unbalance; and
to move the balancing modules (113) to the determined positions.

6. The washing machine according to claim 1, wherein the vibration sensors (21) are mounted at front and rear ends of the external surface of the tub (30).

7. The washing machine according to claim 1, wherein:
the drum (30) comprises a cylindrical member (31) and front and rear plates (32, 33) respectively disposed at the front and rear portions of the cylindrical member (31);
the balancing housings (112) include a first balancer housing (112a) and a second balancer housing (112b) overlapping each other in the direction of a rotary axis of the drum; and
the first balancer housing (112a) and the second balancer housing (112b) are respectively mounted on the front plate and the rear plate.

8. The washing machine according to claim 1, wherein the balancing modules (113) have a rod shape extending in the circumferential direction of the disc-shaped channel.

9. A control method of a washing machine (1), which includes a drum (30), balancer housings (112) mounted on the drum (30), and balancing modules (113) movably disposed in the balancer housings (112), comprising the steps of
i) rotating (500) the drum (30);
ii) detecting (502) a vibration value of a tub (20) of the washing machine, when the RPM of the drum has reached (501) a first RPM;
iii) detecting (504, 505) a position of unbalance applied to the drum (30) and positions of the balancing modules (113) within the balancer housings, when the detected vibration value of the tub is more (503) than a predetermined reference value;
iv) determining (506) positions of the balancing modules (113) to compensate the unbalance applied to the drum; and
v) controlling (507) the balancing modules to move to the determined positions,
wherein in steps iii) and iv) a first position sensor (22) senses a first position identification unit (36) mounted on the drum and generates a reference signal to detect the position of the unbalance and to detect the positions of the balancing modules; and second position sensors (23) sense a second position identification unit (125) mounted on the balancing modules,
wherein the detection of the position of the unbalance applied to the drum (30) includes detecting the relative position of the unbalance with respect to the first position identification unit (36) through phase differences between the reference signal of the first position sensor (22) and signals sensed by the vibration sensors (21).

10. The control method according to claim 9, wherein the detection of the positions of the balancing modules (113) within the balancer housings includes detecting the relative positions of the balancing modules with respect to the first position identification unit (36) through phase differences between the reference signal of the first position sensor (22) and signals sensed by the second position sensors (23).

11. The control method according to claim 9, wherein the determination of the positions of the balancing modules (113) to compensate for the unbalance applied to the drum includes determining positions of the balancing modules to apply force corresponding to the intensity of the unbalance in the opposite direction to the direction of the unbalance.

12. The control method according to claim 9, wherein the control of the balancing modules (113) to move to the determined positions includes controlling the balancing modules to move to the determined positions by generating signals to move the balancing modules to the determined positions and transmitting the signals to the balancing modules.

13. The control method according to claim 9, further comprising re-detecting the vibration value of the tub and comparing the vibration value with the reference value, after the control of the balancing modules to move to the determined positions.

14. The control method according to claim 9, further comprising, when (503) the detected vibration value of the tub is not more than the predetermined reference value:
increasing (509) the RPM of the drum;
judging (510) whether or not the RPM of the drum reaches a second RPM;
measuring (511) the vibration value of the tub, upon judging that the RPM of the drum has not reached the second RPM;
detecting (513) the position of the unbalance applied to the drum (30) and the positions of the balancing modules (113) within the balancer housings, when (512) the detected vibration value of the tub is more than the predetermined reference value;
determining (514) the positions of the balancing modules (113) to compensate for the unbalance applied to the drum;
controlling (516) the balancing modules to move to the determined positions; and
re-detecting (511) the vibration value of the tub and comparing the vibration value with the reference value, when (517) the balancing modules are moved to the determined positions.

15. The control method according to claim 14, further comprising, upon judging (510) that the RPM of the drum has reached the second RPM:
judging (518) whether or not a spin-drying cycle time which is input in advance has passed;
measuring (519) the vibration value of the tub, upon judging that the spin-drying cycle time has not passed;
detecting (521) the position of the unbalance applied to the drum and the positions of the balancing modules within the balancer housings, when (520) the detected vibration value of the tub is more than the predetermined reference value;
determining (522) the positions of the balancing modules (113) to compensate for the unbalance applied to the drum;
controlling (524) the balancing modules to move to the determined positions; and
re-detecting (519) the vibration value of the tub and comparing the vibration value with the reference value, when (525) the balancing modules are moved to the determined positions.

16. The control method according to claim 15, further comprising judging whether or not the spin-drying cycle time has passed, when the detected vibration value of the tub is not more than the predetermined reference value.

17. A balancer for a rotating drum (30) for a washing machine (1) comprising:
a balancer housing (112) including a channel formed therein;
a least one movable balancing module (113) contained within the balancer housing;
wherein the balancing module (113) comprises;
a casing;
a communication unit (120) to receive a signal from a control unit (80),
a drive unit (121) to generate a driving force to move the balancing module along the balancer housing in response to a received signal;
a power supply unit (123) to provide power to the drive unit;
a mass body (124); and **characterized in that** the balancing module (113) additionally comprises
a second position identification unit (125) mounted at a random position within the balancing module (113) to determine the location of the balancing module (113).

18. A balancer for a drum washing machine according to claim 17, wherein the drive unit (121) further comprises at least one wheel (122) to transfer the driving motion to the housing walls to mover the balancing module along the housing.

19. A balancer for a drum washing machine according to claim 17, wherein the ends of casing of the balancing module (113) contain a plurality of balls (126) to reduce the friction between the balancing module and the balancer housing.

## Patentansprüche

1. Waschmaschine (1) mit:
einer Trommel (30), die Wäsche aufnimmt und durch eine von einer Antriebsquelle (40, 42) übertragene Drehkraft gedreht wird, und
Ausgleichsgehäusen (112), die an der Trommel (30) angebracht sind, wobei jedes der Ausgleichsgehäuse einen darin ausgebildeten scheibenförmigen Kanal (111) aufweist;
Ausgleichsmodule (113), die beweglich in den Kanälen (111) der Ausgleichsgehäuse (112) angeordnet sind;
Vibrationssensoren (21) zum Erfassen einer Unwucht, die während der Drehung der Trommel (30) auf diese wirkt;
eine erste Positionserkennungseinheit (36), die an der Außenfläche der Trommel (30) angebracht ist;
eine zweite Positionserkennungseinheit (125), die an einer beliebigen Position innerhalb des Ausgleichsmoduls (113) angebracht ist,
Positionssensoren (22, 23) zum Erfassen der Positionen der Ausgleichsmodule (113), einschließlich eines ersten Positionssensors (22), der dazu ausgelegt ist, die erste Positionserkennungseinheit (36) zu erfassen, und eines zweiten Positionssensors (23), der dazu ausgelegt ist, die zweite Positionserkennungseinheit (125) zu erfassen,
wobei der erste Positionssensor (22) dazu ausgelegt ist, ein Referenzsignal zu erzeugen, um eine Position der Unwucht zu erfassen und Positionen der Ausgleichsmodule (113) zu erfassen; und
einer Steuerung (80), die dazu ausgelegt ist:
- die Intensität der Unwucht anhand von Signalen zu erfassen, die von den Vibrationssensoren (21) erfasst werden,
- die relative Position der Unwucht in Bezug auf die Position der ersten Positionserkennungseinheit (36) anhand von Phasendifferenzen zwischen dem Referenzsignal des ersten Positionssensors (22) und den von den Vibrationssensoren (21) erfassten Signalen zu erfassen,
- Bewegungspositionen der Ausgleichsmodule (113) zur Kompensation der Unwucht auf der Grundlage der erfassten Positionen zu berechnen,
- Bewegungssignale zu übertragen, um die Ausgleichsmodule (113) in die berechneten Bewegungspositionen zu bewegen, und
- die Bewegung der Ausgleichsmodule (113) auf der Grundlage der von den Vibrationssensoren (21) erfassten Position der Unwucht und der von den Positionssensoren (22, 23) erfassten Positionen der Ausgleichsmodule (113) zu steuern.

2. Waschmaschine nach Anspruch 1, wobei:
jedes der Ausgleichsmodule (113) aufweist:
einen Massenkörper (124);
eine Stromversorgungseinheit (123);
eine Kommunikationseinheit (120) zum Empfangen des Bewegungssignals von der Steuerung (80);
eine Antriebseinheit (121) zum Erzeugen einer Antriebskraft, um das Ausgleichsmodul (113) innerhalb des Ausgleichsgehäuses (112) entsprechend dem Bewegungssignal zu bewegen.

3. Waschmaschine nach Anspruch 1, wobei jeder der Positionssensoren (22, 23) einen Hall-Sensor, einen Infrarotsensor oder einen Lichtleitersensor aufweist.

4. Waschmaschine nach Anspruch 2, wobei jede der Positionserfassungseinheiten (36, 125) einen Magnetkörper, eine Lichtemissionseinheit oder eine Reflektorplatte aufweist.

5. Waschmaschine nach einem der vorstehenden Ansprüche, wobei die Steuerung (80) dazu ausgelegt ist,
die relativen Positionen der Ausgleichsmodule (113) in Bezug auf die Position der ersten Positionserkennungseinheit (36) anhand von Phasendifferenzen zwischen dem Referenzsignal des ersten Positionssensors (22) und den von den zweiten Positionssensoren (23) erfassten Signalen zu ermitteln,
Positionen der Ausgleichsmodule (113) zur Kompensation der Unwucht zu bestimmen; und
die Ausgleichsmodule (113) in die bestimmten Positionen zu bewegen.

6. Waschmaschine nach Anspruch 1, wobei die Vibrationssensoren (21) an den vorderen und hinteren Enden der Außenfläche der Trommel (30) angebracht sind.

7. Waschmaschine nach Anspruch 1, wobei:
die Trommel (30) ein zylindrisches Element (31) sowie eine vordere und eine hintere Platte (32, 33) aufweist, die jeweils am vorderen und hinteren Abschnitt des zylindrischen Elements (31) angeordnet sind;
die Ausgleichsgehäuse (112) ein erstes Ausgleichsgehäuse (112a) und ein zweites Ausgleichsgehäuse (112b) enthalten, die sich in Richtung einer Drehachse der Trommel überlappen; und
das erste Ausgleichsgehäuse (112a) und das zweite Ausgleichsgehäuse (112b) entsprechend an der vorderen Platte und der hinteren Platte angebracht sind.

8. Waschmaschine nach Anspruch 1, wobei die Ausgleichsmodule (113) eine Stabform aufweisen, die sich in Umfangsrichtung des scheibenförmigen Kanals erstreckt.

9. Steuerungsverfahren für eine Waschmaschine (1), die eine Trommel (30), an der Trommel (30) montierte Ausgleichsgehäuse (112) und in den Ausgleichsgehäusen (112) beweglich angeordnete Ausgleichsmodule (113) aufweist, mit den Schritten:
i) Drehen (500) der Trommel (30);
ii) Erfassen (502) eines Vibrationswerts eines Waschbehälters (20) der Waschmaschine, wenn die Drehzahl der Trommel eine erste Drehzahl erreicht hat (501);
iii) Erfassen (504, 505) einer Position der auf die Trommel (30) einwirkenden Unwucht und der Positionen der Ausgleichsmodule (113) innerhalb der Ausgleichsgehäuse, wenn der erfasste Vibrationswert des Waschbehälters größer (503) als ein vorbestimmter Referenzwert ist;
iv) Bestimmen (506) von Positionen der Ausgleichsmodule (113), um die auf die Trommel wirkende Unwucht auszugleichen; und
v) Steuern (507) der Ausgleichsmodule, damit sie sich zu den bestimmten Positionen bewegen,
wobei in den Schritten iii) und iv) ein erster Positionssensor (22) eine erste Positionsidentifizierungseinheit (36) erfasst, die an der Trommel angebracht ist, und ein Referenzsignal erzeugt, um die Position der Unwucht zu erfassen und die Positionen der Ausgleichsmodule zu erfassen; und
zweite Positionssensoren (23) eine zweite Positionsidentifizierungseinheit erfassen (125), die an den Ausgleichsmodulen angebracht ist,
wobei die Erfassung der Position der auf die Trommel (30) einwirkenden Unwucht Erfassen der relativen Position der Unwucht in Bezug auf die erste Positionsidentifizierungseinheit (36) durch Phasendifferenzen zwischen dem Referenzsignal des ersten Positionssensors (22) und den von den Vibrationssensoren (21) erfassten Signalen umfasst.

10. Steuerungsverfahren nach Anspruch 9, wobei das Erfassen der Positionen der Ausgleichsmodule (113) innerhalb der Ausgleichsgehäuse Erfassen der relativen Positionen der Ausgleichsmodule in Bezug auf die erste Positionsidentifizierungseinheit (36) anhand von Phasendifferenzen zwischen dem Referenzsignal des ersten Positionssensors (22) und den von den zweiten Positionssensoren (23) erfassten Signalen umfasst.

11. Steuerungsverfahren nach Anspruch 9, wobei das Bestimmen der Positionen der Ausgleichsmodule (113) zum Ausgleich der auf die Trommel einwirkenden Unwucht Bestimmen von Positionen der Ausgleichsmodule umfasst, um eine Kraft entsprechend der Intensität der Unwucht in entgegengesetzter Richtung zur Richtung der Unwucht auszuüben.

12. Steuerungsverfahren nach Anspruch 9, wobei die Steuerung der Ausgleichsmodule (113) zum Bewegen in die bestimmten Positionen Steuern der Ausgleichsmodule zum Bewegen in die bestimmten Positionen durch Erzeugen von Signalen zum Bewegen der Ausgleichsmodule in die bestimmten Positionen und Übertragen der Signale an die Ausgleichsmodule umfasst.

13. Steuerungsverfahren nach Anspruch 9, das ferner erneutes Erfassen des Vibrationswerts der Trommel und Vergleichen des Vibrationswerts mit dem Referenzwert nach der Steuerung der Ausgleichsmodule zum Bewegen in die bestimmten Positionen umfasst.

14. Steuerungsverfahren nach Anspruch 9, das ferner umfasst, wenn (503) der erfasste Vibrationswert des Waschbehälters nicht größer als der vorbestimmte Referenzwert ist:
Erhöhen (509) der Drehzahl der Trommel;
Beurteilen (510), ob die Drehzahl der Trommel eine zweite Drehzahl erreicht oder nicht;
Messen (511) des Vibrationswerts des Waschbehälters, nachdem bestimmt wurde, dass die Drehzahl der Trommel die zweite Drehzahl nicht erreicht hat;
Erfassen (513) der Position der auf die Trommel (30) einwirkenden Unwucht und der Positionen der Ausgleichsmodule (113) innerhalb der Ausgleichsgehäuse, wenn (512) der erfasste Vibrationswert des Waschbehälters größer als der vorbestimmte Referenzwert ist;
Bestimmen (514) der Positionen der Ausgleichsmodule (113), um die auf die Trommel einwirkende Unwucht auszugleichen;
Steuern (516) der Ausgleichsmodule, damit sie sich zu den bestimmten Positionen bewegen; und
erneutes Erfassen (511) des Vibrationswerts des Waschbehälters und Vergleichen des Vibrationswerts mit dem Referenzwert, wenn (517) die Ausgleichsmodule zu den bestimmten Positionen bewegt wurden.

15. Steuerungsverfahren nach Anspruch 14, das nach dem Bestimmen (510), dass die Drehzahl der Trommel die zweite Drehzahl erreicht hat, ferner umfasst:
Bestimmen (518), ob eine im Voraus eingegebene Schleuderzykluszeit abgelaufen ist oder nicht;
Messen (519) des Vibrationswerts des Waschbehälters, nach dem Bestimmen, dass die Schleuderzykluszeit nicht abgelaufen ist;
Erfassen (521) der Position der auf die Trommel einwirkenden Unwucht und der Positionen der Ausgleichsmodule innerhalb der Ausgleichsgehäuse, wenn (520) der erfasste Vibrationswert der Trommel größer als der vorbestimmte Referenzwert ist;
Bestimmen (522) der Positionen der Ausgleichsmodule (113), um die auf die Trommel einwirkende Unwucht auszugleichen;
Steuern (524) der Ausgleichsmodule, damit sie sich zu den bestimmten Positionen bewegen; und
erneutes Erfassen (519) des Vibrationswerts des Waschbehälters und Vergleichen des Vibrationswerts mit dem Referenzwert, wenn (525) die Ausgleichsmodule zu den bestimmten Positionen bewegt worden sind.

16. Steuerungsverfahren nach Anspruch 15, das ferner umfasst: Beurteilen, ob die Schleuderzykluszeit abgelaufen ist oder nicht, wenn der erfasste Vibrationswert des Waschbehälters nicht größer als der vorbestimmte Referenzwert ist.

17. Auswuchtvorrichtung für eine rotierende Trommel (30) einer Waschmaschine (1), mit:
einem Ausgleichsgehäuse (112) mit einem darin ausgebildeten Kanal;
mindestens einem beweglichen Ausgleichsmodul (113), das in dem Ausgleichsgehäuse enthalten ist;
wobei das Ausgleichsmodul (113) aufweist:
ein Gehäuse;
eine Kommunikationseinheit (120) zum Empfangen eines Signals von einer Steuerung (80),
eine Antriebseinheit (121) zum Erzeugen einer Antriebskraft, um das Ausgleichsmodul entlang des Ausgleichsgehäuses in Reaktion auf ein empfangenes Signal zu bewegen;
eine Stromversorgungseinheit (123) zum Versorgen der Antriebseinheit mit Strom;
einen Massenkörper (124); und **dadurch gekennzeichnet, dass** das Ausgleichsmodul (113) zusätzlich aufweist
eine zweite Positionserkennungseinheit (125), die an einer beliebigen Position innerhalb des Ausgleichsmoduls (113) angebracht ist, um die Lage des Ausgleichsmoduls (113) zu bestimmen.

18. Auswuchtvorrichtung für eine Trommelwaschmaschine nach Anspruch 17, wobei die Antriebseinheit (121) ferner mindestens ein Rad (122) aufweist, um die Antriebsbewegung auf die Gehäusewände zu übertragen, um das Ausgleichsmodul entlang des Gehäuses zu bewegen.

19. Auswuchtvorrichtung für eine Trommelwaschmaschine nach Anspruch 17, wobei die Gehäuseenden des Ausgleichsmoduls (113) eine Vielzahl von Kugeln (126) enthalten, um die Reibung zwischen dem Ausgleichsmodul und dem Gehäuse der Auswuchtvorrichtung zu verringern.

## Revendications

1. Machine à laver (1) comprenant :
un tambour (30) destiné à recevoir le linge et entraîné en rotation par une force de rotation transmise par une source d'entraînement (40, 42), et
des boîtiers d'équilibreur (112) montés sur le tambour (30), chacun des boîtiers d'équilibreur comportant un canal en forme de disque (111) formé à l'intérieur;
des modules d'équilibrage (113) disposés de manière mobile dans les canaux (111) des boîtiers d'équilibreur (112);
des capteurs de vibrations (21) destinés à détecter le déséquilibre appliqué au tambour (30) pendant la rotation de celui-ci;
une première unité d'identification de position (36) montée sur la surface externe du tambour (30);
une seconde unité d'identification de position (125) montée à une position aléatoire à l'intérieur du module d'équilibrage (113),
des capteurs de position (22, 23) destinés à détecter les positions des modules d'équilibrage (113), comprenant un premier capteur de position (22) conçu pour détecter la première unité d'identification de position (36) et des seconds capteurs de position (23) conçus pour détecter la seconde unité d'identification de position (125),
dans lequel le premier capteur de position (22) est conçu pour générer un signal de référence afin de détecter une position du déséquilibre et de détecter les positions des modules d'équilibrage (113);
et
un contrôleur (80) conçu pour:
- détecter l'intensité du déséquilibre à partir des signaux détectés par les capteurs de vibrations (21),
- détecter la position relative du déséquilibre par rapport à la position de la première unité d'identification de position (36) à l'aide des différences de phase entre le signal de référence du premier capteur de position (22) et les signaux détectés par les capteurs de vibrations (21),
- calculer les positions de déplacement des modules d'équilibrage (113) pour compenser le déséquilibre sur la base des positions détectées,
- transmettre des signaux de déplacement pour déplacer le module d'équilibrage (113) vers les positions de déplacement calculées, et
- commander le déplacement des modules d'équilibrage (113) sur la base de la position du déséquilibre détectée par les capteurs de vibrations (21) et des positions des modules d'équilibrage (113) détectées par les capteurs de position (22, 23).

2. Machine à laver selon la revendication 1, dans laquelle:
chacun des modules d'équilibrage (113) comprend:
un corps de masse (124);
une unité d'alimentation électrique (123);
une unité de communication (120) destinée à recevoir le signal de déplacement provenant du contrôleur (80);
une unité d'entraînement (121) destinée à générer une force d'entraînement pour déplacer le module d'équilibrage (113) à l'intérieur du boîtier d'équilibreur (112) en fonction du signal de déplacement.

3. Machine à laver selon la revendication 1, dans laquelle chacun des capteurs de position (22, 23) comprend un capteur à effet Hall, un capteur infrarouge ou un capteur à fibre optique.

4. Machine à laver selon la revendication 2, dans laquelle chacune des unités d'identification de position (36, 125) comprend un corps magnétique, une unité d'émission de lumière ou une plaque réfléchissante.

5. Machine à laver selon l'une des revendications précédentes, dans laquelle le contrôleur (80) est conçu
pour détecter les positions relatives des modules d'équilibrage (113) par rapport à la position de la première unité d'identification de position (36) grâce aux différences de phase entre le signal de référence du premier capteur de position (22) et les signaux détectés par les seconds capteurs de position (23),
pour déterminer les positions des modules d'équilibrage (113) afin de compenser le déséquilibre; et
déplacer les modules d'équilibrage (113) vers les positions déterminées.

6. Machine à laver selon la revendication 1, dans laquelle les capteurs de vibrations (21) sont montés aux extrémités avant et arrière de la surface externe de la cuve (30).

7. Machine à laver selon la revendication 1, dans laquelle :
le tambour (30) comprend un élément cylindrique (31) et des plaques avant et arrière (32, 33) disposées respectivement aux parties avant et arrière de l'élément cylindrique (31);
les boîtiers d'équilibreur (112) comprennent un premier boîtier d'équilibreur (112a) et un second boîtier d'équilibreur (112b) se chevauchant l'un l'autre dans la direction d'un axe de rotation du tambour; et
le premier boîtier d'équilibreur (112a) et le second boîtier d'équilibreur (112b) sont respectivement montés sur la plaque avant et la plaque arrière.

8. Machine à laver selon la revendication 1, dans laquelle les modules d'équilibrage (113) ont une forme de tige s'étendant dans la direction circonférentielle du canal en forme de disque.

9. Procédé de commande d'une machine à laver (1), qui comprend un tambour (30), des boîtiers d'équilibreur (112) montés sur le tambour (30), et des modules d'équilibrage (113) disposés de manière mobile dans les boîtiers d'équilibreur (112), comprenant les étapes consistant à
i) faire tourner (500) le tambour (30) ;
ii)détecter (502) une valeur de vibration d'une cuve (20) de la machine à laver, lorsque la vitesse de rotation du tambour a atteint (501) une première vitesse de rotation;
iii)détecter (504, 505) une position de déséquilibre appliquée au tambour (30) et les positions des modules d'équilibrage (113) à l'intérieur des boîtiers d'équilibreur, lorsque la valeur de vibration détectée de la cuve est supérieure (503) à une valeur de référence prédéterminée;
iv)déterminer (506) les positions des modules d'équilibrage (113) afin de compenser le déséquilibre appliqué au tambour; et
v)commander (507) les modules d'équilibrage pour qu'ils se déplacent vers les positions déterminées, dans lequel, aux étapes iii) et iv), un premier capteur de position (22) détecte une première unité d'identification de position (36) montée sur le tambour et génère un signal de référence pour détecter la position du déséquilibre et pour détecter les positions des modules d'équilibrage; et des seconds capteurs de position (23) détectent une seconde unité d'identification de position (125) montée sur les modules d'équilibrage, dans lequel la détection de la position du déséquilibre appliqué au tambour (30) comprend la détection de la position relative du déséquilibre par rapport à la première unité d'identification de position (36) par le biais de différences de phase entre le signal de référence du premier capteur de position (22) et les signaux détectés par les capteurs de vibrations (21).

10. Procédé de commande selon la revendication 9, dans lequel la détection des positions des modules d'équilibrage (113) à l'intérieur des carters d'équilibreur comprend la détection des positions relatives des modules d'équilibrage par rapport à la première unité d'identification de position (36) grâce aux différences de phase entre le signal de référence du premier capteur de position (22) et les signaux détectés par les seconds capteurs de position (23).

11. Procédé de commande selon la revendication 9, dans lequel la détermination des positions des modules d'équilibrage (113) pour compenser le déséquilibre appliqué au tambour comprend la détermination des positions des modules d'équilibrage pour appliquer des forces correspondant à l'intensité du déséquilibre dans la direction opposée à celle du déséquilibre.

12. Procédé de commande selon la revendication 9, dans lequel la commande des modules d'équilibrage (113) pour qu'ils se déplacent vers les positions déterminées comprend la commande des modules d'équilibrage pour qu'ils se déplacent vers les positions déterminées en générant des signaux pour déplacer les modules d'équilibrage vers les positions déterminées et en transmettant les signaux aux modules d'équilibrage.

13. Procédé de commande selon la revendication 9, comprenant en outre la redétection de la valeur de vibration du tambour et la comparaison de la valeur de vibration avec la valeur de référence, après la commande des modules d'équilibrage pour qu'ils se déplacent vers les positions déterminées.

14. Procédé de commande selon la revendication 9, comprenant en outre, lorsque (503) la valeur de vibration détectée du tambour n'est pas supérieure à la valeur de référence prédéterminée:
l'augmentation (509) de la vitesse de rotation du tambour ;
déterminer (510) si la vitesse de rotation du tambour atteint ou non une seconde vitesse de rotation;
mesurer (511) la valeur de vibration du tambour, après avoir déterminé que la vitesse de rotation du tambour n'a pas atteint la seconde vitesse de rotation;
détecter (513) la position du déséquilibre appliqué au tambour (30) et les positions des modules d'équilibrage (113) à l'intérieur des carters d'équilibreur, lorsque (512) la valeur de vibration détectée du tambour est supérieure à la valeur de référence prédéterminée;
déterminer (514) les positions des modules d'équilibrage (113) afin de compenser le déséquilibre appliqué au tambour;
commander (516) les modules d'équilibrage pour qu'ils se déplacent vers les positions déterminées; et
détecter à nouveau (511) la valeur de vibration du tambour et comparer cette valeur à la valeur de référence, lorsque (517) les modules d'équilibrage sont déplacés vers les positions déterminées.

15. Procédé de commande selon la revendication 14, comprenant en outre, lorsque l'on détermine (510) que la vitesse de rotation du tambour a atteint la seconde vitesse de rotation, les opérations suivantes:
évaluer (518) si une durée de cycle d'essorage qui a été saisie au préalable s'est écoulée ou non;
mesurer (519) la valeur de vibration du tambour, après avoir déterminé que la durée du cycle d'essorage n'est pas écoulée;
détecter (521) la position du déséquilibre appliqué au tambour et les positions des modules d'équilibrage à l'intérieur des boîtiers d'équilibreur, lorsque (520) la valeur de vibration détectée de la cuve est supérieure à la valeur de référence prédéterminée;
déterminer (522) les positions des modules d'équilibrage (113) afin de compenser le déséquilibre appliqué au tambour;
commander (524) les modules d'équilibrage pour qu'ils se déplacent vers les positions déterminées; et
détecter à nouveau (519) la valeur de vibration de la cuve et comparer la valeur de vibration à la valeur de référence, lorsque (525) les modules d'équilibrage sont déplacés vers les positions déterminées.

16. Procédé de commande selon la revendication 15, comprenant en outre l'étape consistant à déterminer si le temps du cycle d'essorage est écoulé ou non, lorsque la valeur de vibration détectée du tambour n'est pas supérieure à la valeur de référence prédéterminée.

17. Équilibreur pour un tambour rotatif (30) destiné à une machine à laver (1), comprenant:
un boîtier d'équilibreur (112) comportant un canal formé à l'intérieur;
au moins un module d'équilibrage mobile (113) contenu dans le boîtier d'équilibreur;
dans lequel le module d'équilibrage (113) comprend:
un boîtier;
une unité de communication (120) destinée à recevoir un signal provenant d'une unité de commande (80),
une unité d'entraînement (121) destinée à générer une force d'entraînement pour déplacer le module d'équilibrage le long du boîtier d'équilibreur en réponse à un signal reçu;
une unité d'alimentation (123) destinée à fournir de l'énergie à l'unité d'entraînement;
un corps de masse (124); et
**caractérisé en ce que** le module d'équilibrage (113) comprend en outre une deuxième unité d'identification de position (125) montée à une position aléatoire à l'intérieur du module d'équilibrage (113) pour déterminer l'emplacement du module d'équilibrage (113).

18. Equilibreur pour une machine à laver à tambour selon la revendication 17, dans lequel l'unité d'entraînement (121) comprend en outre au moins une roue (122) destinée à transférer le mouvement d'entraînement aux parois du boîtier afin de déplacer le module d'équilibrage le long du boîtier.

19. Dispositif d'équilibrage pour une machine à laver à tambour selon la revendication 17, dans lequel les extrémités du boîtier du module d'équilibrage (113) contiennent une pluralité de billes (126) destinées à réduire le frottement entre le module d'équilibrage et le boîtier d'équilibreur.
